# EUROPÄISCHE PATENTSCHRIFT

(11) **EP 3 500 134 B1**
(45) Veröffentlichungstag und Bekanntmachung des Hinweises auf die Patenterteilung: **17.11.2021**
(21) Anmeldenummer: 17739850.0
(22) Anmeldetag: 10.07.2017
(51) Int. Cl.: A47B 88/493, F16C 33/46, A47B 88/487, F16C 33/34

(54) **LAUFWAGEN MIT ZUMINDEST EINEM WÄLZKÖRPER**
CARRIAGE WITH AT LEAST ONE ROLLING BODY
CHARIOT DOTÉ D'AU MOINS UN CORPS DE CYLINDRE

(30) Priorität: 18.08.2016 AT 507452016
(43) Veröffentlichungstag der Anmeldung: 26.06.2019
(73) Patentinhaber: Julius Blum GmbH, 6973 Höchst (AT)
(72) Erfinder: GASSER, Ingo, 6973 Höchst (AT)
(74) Vertreter: Torggler & Hofinger Patentanwälte
(86) Internationale Anmeldenummer: PCT/AT2017/060171
(87) Internationale Veröffentlichungsnummer: WO 2018/032024

(56) Entgegenhaltungen:
- WO-A1-2011/146951
- WO-A1-2014/000762
- WO-A1-2016/068028
- CH-A5- 574 724
- DE-A1- 2 518 647
- DE-U1-202015 101 836
- JP-A- 2011 226 571

## Beschreibung

Die Erfindung betrifft einen Laufwagen mit zumindest einem Wälzkörper zur Lastübertragung zwischen zwei Schubladenschienen mit den Merkmalen der Oberbegriffe des Anspruches 1.

Weiters soll ein Verfahren zur Herstellung eines Laufwagens, eine Schubladenausziehvorrichtung und eine Schublade angegeben werden.

Laufwägen der eingangs genannten Art zählen bereits zum Stand der Technik und werden beispielsweise in der WO 2014/000762 A1 oder der WO 2011/146951 A1 gezeigt. Wälzkörper weisen Lagerzapfen auf, wobei die Lagerzapfen als Wellenabschnitte dienen, welche in einfacher Weise drehbar in Lageraufnahmen des Wälzkörperkäfigs eingreifen. Die Lagerzapfen können unterschiedliche Formen aufweisen. Die Lagerung erfolgt dabei oftmals nur punktuell oder nur an einem durch die Form der Lagerfläche bestimmten Teilbereich der Lagerflächen. Auch wenn der Lagerzapfen unterschiedliche Formen aufweist, wird beim Stand der Technik keine der Form des Lagerzapfens entsprechend korrespondierende Gegenform verwendet, um diesen zu lagern. Somit steigert sich der Verschleiß in den punktuellen Aufnahmebereichen oder Abschnittsbereichen zwischen Wälzkörperkäfig und Lagerzapfen. Zunehmender Verschleiß zwischen Laufwagen und Wälzkörpern sorgt zu Störungen im Bewegungsablauf einer Schubladenausziehführung. Durch erhöhten Verschleiß entsteht eine Geräuschentwicklung beim Öffnen und Schließen einer Schublade, weiters kann der erhöhte Verschleiß dazu führen, dass das Spaltmaß zwischen dem Möbelkorpus und der Schublade nach einer gewissen Zeit nicht mehr gleichmäßig ist und ansehnlich wirkt. Ist die Lagerung zwischen dem Laufwagen und dem Wälzkörper stark verschlissen, so kann der Laufwagen sich relativ zum Wälzkörper bewegen, was zum Verklemmen oder Blockieren der Wälzkörper führen kann. Weiters kann die Schublade in einer Position steckenbleiben, eine Reparatur muss durchgeführt werden. Zudem äußert sich das Einsetzen der Wälzkörper in den Laufwagen für das Montagepersonal als äußerst schwierig. Es muss mehr Kraft aufgewendet werden, um die Wälzkörper in den Laufwagen einzupressen.

Aufgabe der Erfindung ist es die vorbeschriebenen Nachteile zu vermeiden und eine insbesondere optimierte Lagerung zwischen dem zumindest einen Wälzkörper und dem Laufwagen anzugeben. Der Verschleiß im Lagerbereich des zumindest einen Wälzkörper am Laufwagen sollte reduziert und der Einbau des zumindest einen Wälzkörpers im Laufwagen vereinfacht werden. Eine weitere Aufgabe der Erfindung liegt darin, ein verbessertes Verfahren für die Produktion eines erfindungsgemäßen Laufwagens anzugeben. Durch das Verfahren sollten die Produktionskosten zur Herstellung eines Wälzkörpers verringert und die Formen zur Herstellung des Wälzkörpers vereinfacht werden. Es sollte zudem aufgrund der Ausstattung einer Schubladenausziehvorrichtung mit einem derartigen Laufwagen, welcher zumindest einen derartigen Wälzkörper beinhaltet, wird die Funktion der Schubladenausziehvorrichtung optimiert und eine längere Lebensdauer der Schubladenausziehvorrichtung erzielt werden.

Diese Aufgaben werden gelöst durch die Merkmale der unabhängigen Ansprüche 1 und 12.

Dadurch, dass beim erfindungsgemäßen Laufwagen gemäß Anspruch 1 die Lagerfläche eine der Mantelfläche des zumindest einen Wälzkörpers in ihrer Form im Wesentlichen angepasste, um die Drehachse rotationssymmetrische, Gegenform aufweist, ist eine optimale Lagerung des zumindest einen Wälzkörpers in der Lagerfläche des Laufwagens gewährleistet. Durch die korrespondierenden Formen der Mantelfläche des Wälzkörpers und der Gegenform am Laufwagen äußert sich der Einbau des Wälzkörpers im Laufwagen zudem als äußerst einfach. Ein versehentliches Herausfallen aus diesem ist nach dem Einbau nicht zu erwarten. Weiters entstehen keine Reibungspunkte an Abschnitten des Lagerzapfens oder der Lagerfläche am Laufwagen, der Verschleiß an den Stirnflächen der Wälzkörper wird auf ein Mindestmaß reduziert oder sogar vermieden. Die Form der räumlich gekrümmten Mantelfläche des Vorsprunges bzw. der Einsenkung stimmt dabei vorteilhaft mit der ebenfalls räumlich gekrümmten Gegenform der Lagerfläche im Wesentlichen überein. Als räumlich gekrümmte Flächen eignen sich insbesondere Kegelflächen und Kugelsegmentflächen.

Dadurch, dass beim erfindungsgemäßen Laufwagen der Vorsprung nur auf einer der beiden Seitenflächen des Wälzkörpers ausgebildet ist, ist der Wälzkörper kostengünstiger in seiner Herstellung. Die gegenüberliegende Stirnfläche, welche keinen Vorsprung aufweist, liegt dabei frei gelagert an einem Teilbereich des Laufwagens auf, was den Wälzkörper am Herausfallen aus dem Laufwagen hindert. Durch diesen einseitigen Vorsprung wird der Einbau des Wälzkörpers im Laufwagen zudem vereinfacht. Dadurch, dass nur an einer Seite eine Lagerung über einen Vorsprung erfolgt, entstehen auf der gegenüberliegenden Seite weniger Reibflächen, was zu geringeren Reibungswiderständen bei der Bewegung der Schubladenausziehvorrichtung beiträgt.

Wenn der Laufwagen mehrere Wälzkörper aufweist, wobei die Wälzkörper mit ihrer Drehachse in einer horizontalen Ebene und/oder einer vertikalen Ebene angeordnet sind, kommt es zu einer optimalen Kraftaufteilung zwischen den beweglichen Schubladenschienen. Bei einer beladenen Schublade treten beim Verfahren zwischen einer Offen- und einer Schließstellung der Schublade Kräfte durch das Gewicht der Schublade und dessen Inhalt bzw. durch das Öffnen und Schließen der Schublade in einer Horizontal- und auch in einer Vertikalebene auf. Diese Kräfte müssen durch die Wälzkörper und den Laufwagen kompensiert werden. Die Wälzkörper in der Horizontalebene nehmen dabei z.B. die Gewichtskräfte der Schublade und dessen Inhalt auf. Krafteinleitungen, die zu Schrägbelastungen führen, wie sie beispielsweise beim Öffnen und Schließen der Schublade geschehen, werden durch die in der Vertikalachse oder Vertikalebene ausgerichteten Wälzkörper kompensiert. Wenn der Laufwagen mehrere Wälzkörper aufweist, wobei ein Teil der Wälzkörper in jeder Drehachse in einer horizontalen Ebene und zumindest ein Wälzkörper in einer rechtwinklig zur horizontalen Ebene liegenden vertikalen Ebene angeordnet ist, so ist ein spielfreies Bewegen der Schublade zwischen der Offen- und der Schließstellung gewährleistet. Werden mehrere Wälzkörper verwendet, die in unterschiedlichen Ebenen angeordnet sind, werden die schräg zur Bewegungsrichtung der Schublade wirkenden Kräfte am besten aufgenommen.

Wenn der Laufwagen zur Aufnahme des zumindest einen Wälzkörpers für jeden einzelnen Wälzkörper je zwei gegenüberliegende Lagerflächen aufweist, wobei der Laufwagen eine an die Lagerflächen angrenzende Anlagefläche ausbildet, welche mit zumindest einer der Stirnflächen zumindest abschnittsweise kontaktiert, so wird an einer der Lagerflächen der Wälzkörper mit seinem Vorsprung gelagert, an der gegenüberliegenden Seite lediglich über die Anlagefläche. Wird der Wälzkörper um 180° verdreht eingebaut, so greift dieser dennoch in eine der Lagerflächen mit seinem Vorsprung ein, an der gegenüberliegenden Seite wird der Wälzkörper durch die Anlagefläche vor dem Herausfallen gehindert. Ein falsches Einbauen des Wälzkörpers ist somit trotz nur einseitiger Ausbildung des Lagerzapfens ausgeschlossen.

Wenn der zumindest eine Wälzkörper mit der im Wesentlichen ebenen, insbesondere kreisförmigen, zweiten Stirnfläche mit der Anlagefläche des Laufwagens kontaktiert und die erste Stirnfläche des Wälzkörpers mit dem daran angeordneten Vorsprung in eine der zwei Lagerflächen eingreift, so wird der Wälzkörper entlang seiner Drehachse gelagert und kann sich nur noch mit einem geringen Spiel entlang seiner Drehachse im eingebauten Zustand bewegen. Er greift dabei nur an einer Seite mit dem Vorsprung in eine der Lagerflächen ein, das Einsetzen des Wälzkörpers erfolgt somit vereinfacht, ein Bewegen entlang dessen Drehachse ist eingeschränkt, die Reibung wird aufgrund von nur einem Vorsprung auf ein Mindestmaß reduziert.

Wenn der Laufwagen für jeden Wälzkörper zwei gegenüberliegende, in ihrer Form im Wesentlichen gleiche, vorzugsweise konvex oder konkav ausgestaltete, Lagerflächen aufweist, wobei in Einbaulage des zumindest einen Wälzkörpers eine der beiden Lagerflächen frei von einem Vorsprung bleibt, so kann der Wälzkörper auch 180° verdreht im Laufwagen eingesetzt werden, ohne dessen Funktion zu behindern. Dadurch, dass am Wälzkörper nur ein Vorsprung ausgeführt ist, am Laufwagen jedoch an beiden Seiten eine zum Vorsprung korrespondierende Lagerfläche ausgebildet wird, kann ein falscher Einbau des Wälzkörpers ausgeschlossen werden. Egal in welche Ausrichtung dieser Wälzkörper in den Laufwagen eingesetzt wird, er wird immer an einer Seite über eine der Lagerflächen an dem Vorsprung gelagert. Die gegenüberliegende Seite steht an den Anlageflächen an.

Wenn der Vorsprung des Wälzkörpers durch einen Kegelmantel mit einem Kegelwinkel ausgebildet wird und dieser in eine der beiden Lagerflächen eingreift, wobei die Lagerflächen eine dem Kegelmantel korrespondierende Gegenform mit einem Gegenwinkel ausgebildet sind, so entstehen zwei korrespondierende Formen in Form eines Kegelmantels.

Wenn der Wert des Gegenwinkels sich aus einem Wert von +0,5° bis +3,0° des Wertes des Kegelwinkels errechnet, so ist eine optimale Passform des Vorsprungs in der Lagerfläche gewährleistet. Es wäre jedoch auch möglich, eine Einsenkung mit einem Kegelwinkel am Wälzkörper auszubilden, die Lagerfläche am Laufwagen ist somit ein Vorsprung, der mit einem Gegenwinkel ausgebildet ist.

In einem weiteren Ausführungsbeispiel ist vorgesehen, dass der Vorsprung des Wälzkörpers durch ein Kugelsegment mit einem Vorsprungradius ausgebildet wird und diese in eine der beiden Lagerflächen eingreift, wobei die Lagerflächen durch eine dem Kugelsegment korrespondierende Gegenform mit einem Gegenradius ausgebildet sind. Auch hier wird über die korrespondierenden Formen eine optimale Lagerung des Wälzkörpers gewährleistet. Dadurch, dass der Wert des Vorsprungsradius kleiner/gleich dem Wert des Gegenradius ist, wird eine effektive und reibungslose Lagerung des Wälzkörpers im Laufwagen hergestellt.

Wenn der Laufwagen aus POM oder PA mit einem Glasfaseranteil von 30% gefertigt ist, so wird ein langlebiger Laufwagen mit ausreichend Elastizität, Stabilität und Verschleißfestigkeit realisiert.

In einem weiteren Ausführungsbeispiel ist vorgesehen, dass der Wälzkörper im Wesentlichen durch eine Walze oder eine bombierte Walze ausgebildet wird. Eine bombierte Walz trägt den Vorteil, dass durch die Bombierung eine größere Kraftaufnahmefläche erzielt wird.

Wenn das Verhältnis zwischen einer Wälzkörperlänge und einem Wälzkörperdurchmesser einen Wert zwischen 2:1 und 4:1 beträgt, so wird ein Wälzkörper mit einem geringen Durchmesser und einer großen, umfangsseitigen Auflagefläche produziert. Der geringe Durchmesser erlaubt eine kompakte Bauweise der Schubladenausziehvorrichtung, die große Auflagefläche am Umfang dient dazu, eine verdrehsteife Schubladenausziehführung herzustellen. Es können aufgrund der großen Auflagefläche hohe Tragkräfte erzielt werden. Wenn der Wälzkörper aus POM hergestellt ist, entsteht ein verschleißbeständiger, leichtläufiger und geräuschminimierender Wälzkörper.

Beim erfindungsgemäßen Verfahren gemäß Anspruch 12 wird der Wälzkörper in einem Spritzgießverfahren hergestellt, wobei der Anguss des Wälzkörpers für die Lagerung des Wälzkörpers in einem Laufwagen verwendet wird. Vor allem bei nur einem Vorsprung zur Lagerung des Wälzkörpers in einem Laufwagen entsteht somit ein sehr kostengünstiger Wälzkörper. Es muss nicht beidseitig zur Lagerung des Wälzkörpers ein Vorsprung angeformt werden. Wird der Wälzkörper nach dem Anspritzen im Spitzgießverfahren entnommen, muss kein Vorsprung oder ein Lagerzapfen in irgendeiner Form angeformt werden.

Wie eingangs ausgeführt wird Schutz auch begehrt für eine Schubladenausziehvorrichtung gemäß Anspruch 13 und eine Schublade gemäß Anspruch 14.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
Fig. 1 schematische Darstellung eines Laufwagens zwischen zwei Schubladenschienen,
Fig. 2 Laufwagen mit mehreren Wälzkörpern,
Fig. 3a - Fig. 5b unterschiedliche Varianten von Wälzkörpern und Laufwägen, wobei nur die Ausführungsbeispiele der Abbildungen 4a, 4b, 5a und 5b erfindungsgemäß sind.
Fig. 6 - Fig. 9 unterschiedliche Varianten von Wälzkörpern, wobei nur die Ausführungsbeispiele der Abbildungen 6 und 7 erfindungsgemäß sind.
Fig. 10 die Dimensionierung des Wälzkörpers,
Fig. 11 Schnittdarstellung eines nicht erfindungsgemäßen Laufwagens mit Wälzkörpern in unterschiedlichen Ebenen,
Fig. 12 Detailzeichnung Laufwagen,
Fig. 13 Detailzeichnung gelagerter erfindungsgemäßer Wälzkörper im Laufwagen und
Fig. 14 Schublade mit zumindest einer Schubladenausziehvorrichtung.

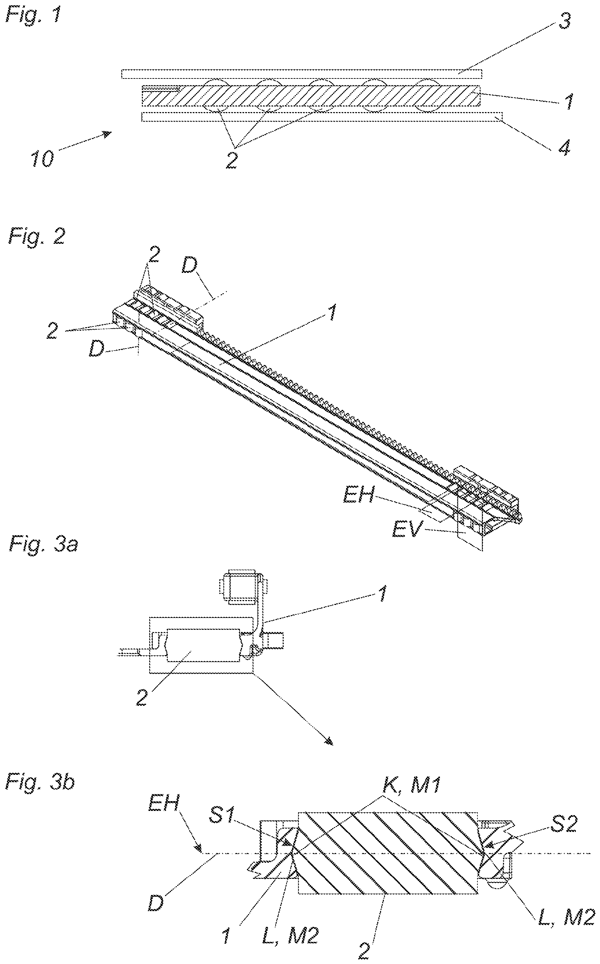

Fig. 1 zeigt einen Laufwagen 1 mit darin beweglich gelagerten Wälzkörpern 2, zur Lagerung von zumindest zwei Schubladenschienen 3, 4 einer Schubladenausziehvorrichtung 10. Der Laufwagen 1 dient dabei zur Lagerung des zumindest einen Wälzkörpers 2. Die zumindest zwei Schubladenschienen 3, 4 liegen dabei an den Umfangsflächen der Wälzkörper 2 auf und sind relativ zueinander beweglich.

Fig. 2 zeigt einen Laufwagen 1 mit einer Mehrzahl aus Wälzkörpern 2. Die Lagerung erfolgt dabei um die Drehachse D, welche bei einem Teil der Wälzkörper 2 in einer vertikalen Ebene EV ausgerichtet ist, der andere Teil der Wälzkörper 2 ist mit deren Drehachse D entlang der Horizontalebene EH ausgerichtet.

Die Fig. 3a zeigt eine nicht erfindungsgemäße Variante des Laufwagens 1 mit einem darin beweglichen Wälzkörper 2.

Die Fig. 3b zeigt den detaillierten Ausschnitt aus Fig. 3a. Die Drehachse D erstreckt sich dabei in der Horizontalebene EH, diese könnte jedoch auch in der Vertikalebene EV ausgerichtet sein. Der Wälzkörper 2 weist an beiden Stirnflächen S1, S2 einen Vorsprung K auf. Dieser Vorsprung K wird durch eine Mantelfläche M1 ausgebildet. Korrespondierend zu dieser Mantelfläche M1 weist die Lagerfläche L des Laufwagens 1 die Gegenform M2 auf. Durch die beidseitige Lagerung über die Mantelfläche M1 zur Gegenform M2 entsteht ein formschlüssiger Verbund zwischen Wälzkörper 2 und Laufwagen 1. Der Wälzkörper 2 ist somit in seiner Bewegung entlang der Richtung der Drehachse D gehemmt. Um die Drehachse D ist der Wälzkörper 2 drehbar gelagert.

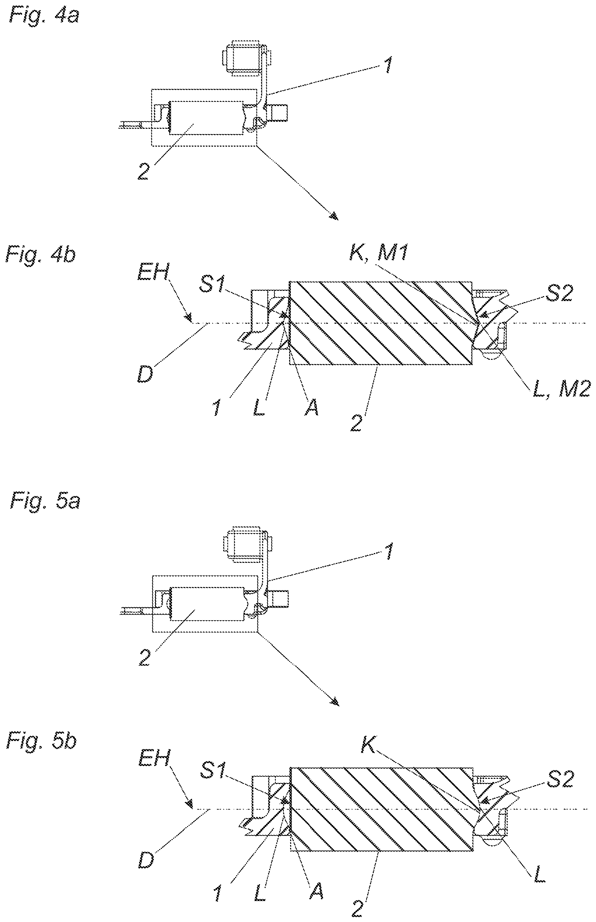

Die Fig. 4a zeigt ein Ausführungsbeispiel des Wälzkörpers 2, die Detailansicht wird in der Fig. 4b gezeigt. Der Wälzkörper 2 weist nur an einer seiner Stirnflächen S1, S2 einen Vorsprung K auf. In diesem Ausführungsbeispiel an der Stirnfläche S2. Der Vorsprung K greift in die korrespondierende Gegenfläche der Lagerfläche L des Laufwagens 1 ein. An der gegenüberliegenden Fläche, der Stirnseite S1, weist der Laufwagen 1 eine an die Lagerflächen L angrenzende Anlagefläche A auf. Somit ist der Wälzkörper 2 nur einseitig über den Vorsprung K in einer der Laufflächen L gelagert, an der gegenüberliegenden Seite, der Stirnseite S1, wird der Wälzkörper 2 an einer Bewegung entlang der Drehachse D über die Anlagefläche A begrenzt.

Die Fig. 5a zeigt ein weiteres Ausführungsbeispiel, wie der Wälzkörper 2 in einem Laufwagen 1 gelagert werden kann. Das Detail 5b zeigt, dass der Vorsprung K durch ein Kugelsegment ausgebildet wird, welches in ein korrespondierendes Gegenstück, ausgebildet durch die Lagerfläche L, eingreift. Somit weist der Laufwagen 1 eine konkave Lagerfläche L auf, in die ein konvexer Vorsprung des Wälzkörpers 2 eingreift. Dieser konvexe Vorsprung befindet sich in diesem Ausführungsbeispiel an der Stirnfläche S2, der kreisförmig ausgebildete Bereich des Wälzkörpers 2 an der Stirnfläche S1 liegt über die Anlagefläche A am Laufwagen L auf.

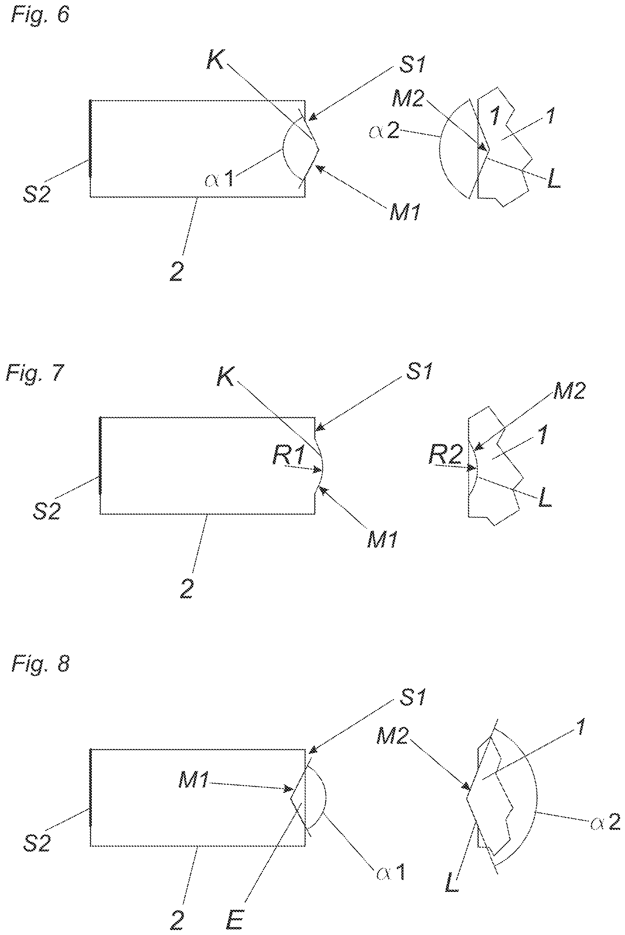

Fig. 6 zeigt detailliert den Winkel α1, in dem sich der Kegelmantel des Vorsprungs K des Wälzkörpers 2 an der Stirnfläche S1 erstreckt. Korrespondierend dazu weist die Lagerfläche L am Laufwagen 1 die Gegenform M2 auf, welche sich im Winkel α2 erstreckt. Der Wert des Gegenwinkels α2 errechnet sich aus einem Wert von +0,5° bis +3,0° des Wertes des Kegelwinkels α1.

Fig. 7 zeigt den Vorsprung K, ausgebildet als Kugelsegment. Der Vorsprung K am Wälzkörper 2 erstreckt sich über einen Radius R1. Auch in diesem Ausführungsbeispiel ist der Vorsprung K nur an der Stirnfläche S1 ausgebildet. Die Stirnfläche S2 weist keinen Vorsprung K auf. Der Radius R1 der Mantelfläche M1 greift in eine korrespondierende Gegenfläche M2 der Lagerfläche L ein. Die Lagerfläche L2 ist eine konkave Einsenkung, welche mit der Form der Mantelfläche M1 korrespondiert. Der Gegenradius R2 und der Vorsprungsradius R1 stehen in einem gewissen Verhältnis zueinander. Der Wert des Vorsprungsradius R1 ist kleiner/gleich dem Wert des Gegenradius R2.

Fig. 8 zeigt ein nicht erfindungsgemäßes Beispiel eines Wälzkörpers 2, der eine Einsenkung E ausbildet. Diese Einsenkung E erstreckt sich mit dem Kegelwinkel α1 ins Innere des Wälzkörpers 2. Auch hier wird gezeigt, dass nur an einer Stirnfläche S1 die Lagerung über eine Einbuchtung E erfolgt. Korrespondierend dazu weist der Laufwagen 1 einen Vorsprung K auf, der ebenfalls kegelförmig ausgebildet ist. Der Gegenwinkel α2 der Gegenform M2 ist korrespondierend mit der Form der Einsenkung E. Dabei können Unterschiede von +/- 3° zwischen dem Gegenwinkel α2 und dem Kegelwinkel α1 vorherrschen.

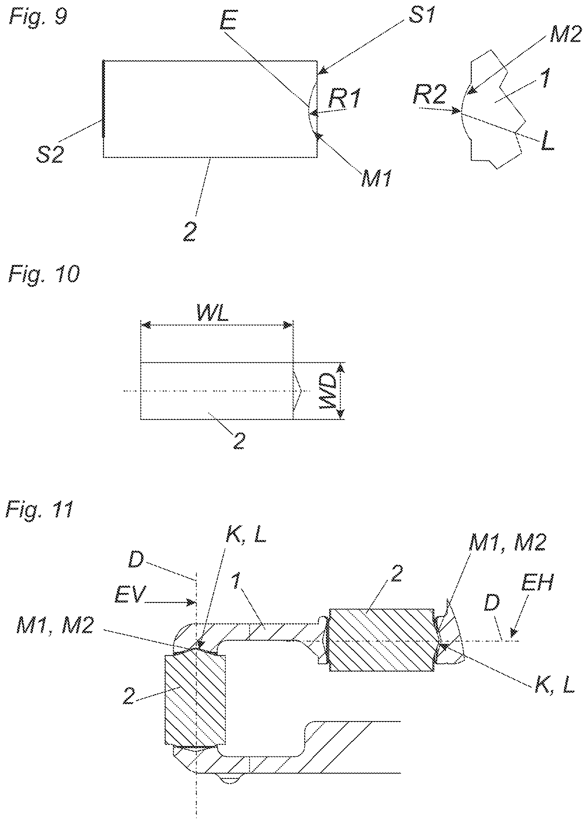

Fig. 9 zeigt im Detail einen nicht erfindungsgemäßen Wälzkörper 2 schematisch dargestellt mit einer Einsenkung E, ausgeformt durch eine Mantelfläche M1. Die Mantelfläche M1 ist dabei konkav ausgeführt und erstreckt sich mit einem Radius R1 ins Innere des Wälzkörpers 2. Auch in diesem Ausführungsbeispiel ist die Einsenkung E nur an der ersten Stirnfläche S1 ausgeführt, die Stirnfläche S2 weist keine Einsenkung E auf. Der Laufwagen 1 weist eine korrespondierende Gegenform M2 auf. Dies ist als konvexer Vorsprung mit einem Gegenradius R2 ausgebildet. Wie auch in der Fig. 7 bereits beschrieben, stehen die Radien R1, R2 in einem bestimmten Verhältnis zueinander.

Fig. 10 zeigt das Verhältnis zwischen einer Wälzkörperlänge WL und einem Wälzkörperdurchmesser WD. Das Verhältnis beträgt 2:1 bis 4:1. Dabei ist die Wälzkörperlänge WL immer länger ausgeführt als der Wälzkörperdurchmesser WD. Die Wälzkörperlänge WL beträgt einen Wert zwischen 8 und 10 mm und der Wälzkörperdurchmesser WD zwischen 2,5 und 3,5 mm.

Die Fig. 11 zeigt eine Schnittdarstellung eines nicht erfindungsgemäßen Laufwagens 1 mit zwei darin angeordneten Wälzkörpern 2. Die Wälzkörper 2 weisen eine Drehachse D auf. Einer der Wälzkörper 2 ist mit seiner Drehachse D in einer vertikalen Ebene EV ausgerichtet, ein weiterer Wälzkörper 2 ist mit seiner Drehachse D in der horizontalen Ebene EH ausgerichtet. Die Wälzkörper 2 sind mit ihrer Mantelfläche M1 in einer Lagerfläche L, die eine Gegenform M2 aufweist, gelagert.

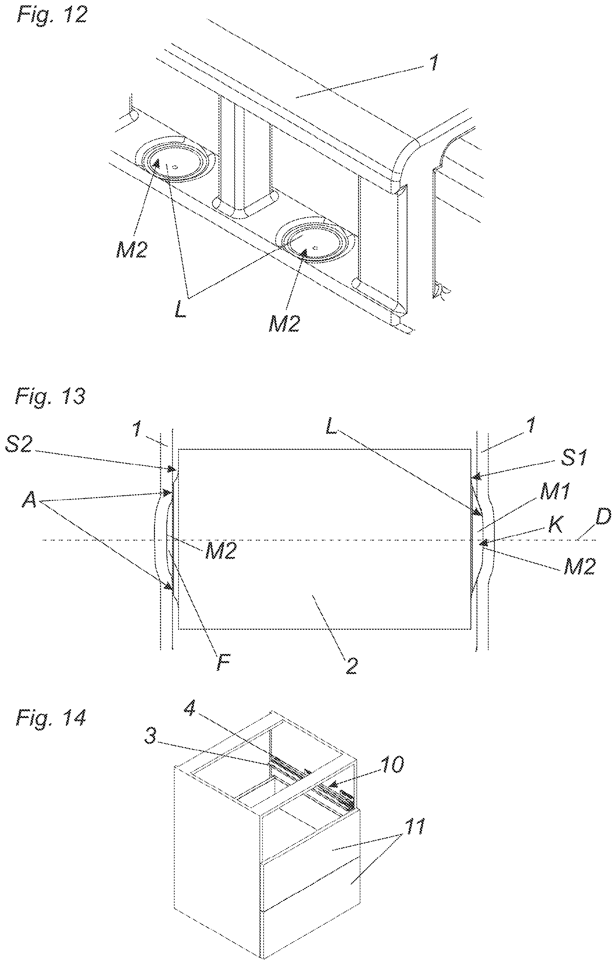

Fig. 12 zeigt detailliert einen Teilbereich des Laufwagens 1 mit Lagerflächen L, die in ihrer Gegenform M2 der Mantelfläche M1 (in der Fig. 12 nicht sichtbar) des Vorsprungs K mit seiner Mantelfläche M1 angepasst sind. Die Gegenform M2 ist rotationssymmetrisch um die in der Fig. 13 gezeigte Drehachse D ausgebildet.

Die Fig. 13 zeigt schematisch dargestellt einen Wälzkörper 2, der mit seinem Vorsprung K an seiner ersten Stirnseite S1 in die Gegenform M2 eingreift. Die Mantelfläche M1 ist dabei der Gegenform M2 in ihrer Form angepasst. Zwischen der Mantelfläche M1 und der Gegenform M2 entsteht somit eine formschlüssige Verbindung. An der gegenüberliegenden Seite, der Stirnseite S2, befindet sich kein Vorsprung K. Hier wird über die im Wesentlichen kreisrunde Form der Seitenfläche S2 ein Kontakt mit der Anlagefläche A des Laufwagens 1 hergestellt. Der Wälzkörper 2 wird somit zwischen den Stegen des Laufwagens 1 gehalten, dabei bleibt dieser um die Drehachse D drehbar gelagert. Entlang der Drehachse D ist eine Bewegung nur in einem geringen Maß möglich. Ein Herausfallen des Wälzkörpers 2 wird durch die Fassung des Wälzkörpers 2 zwischen den zwei Stegen des Laufwagens 1 verhindert.

Fig. 14 zeigt eine Schublade mit zumindest einer Schubladenausziehvorrichtung, welche zumindest einen Laufwagen 1 und zumindest einen Wälzkörper 2 beinhaltet.

## Patentansprüche

1. Laufwagen (1) mit zumindest einem Wälzkörper (2) zur Lastübertragung zwischen zwei Schubladenschienen (3, 4), wobei der zumindest eine Wälzkörper (2) eine Drehachse (D) und zwei Stirnflächen (S1, S2) aufweist und wobei der zumindest eine Wälzkörper (2) einen Vorsprung (K) mit einer um die Drehachse (D) im Wesentlichen rotationssymmetrischen Mantelfläche (M1) aufweist, wobei der Vorsprung (K) an einer Lagerfläche (L) des Laufwagens (1) drehbar gelagert ist, **dadurch gekennzeichnet, dass** die Lagerfläche (L) eine der Mantelfläche (M1) des zumindest einen Wälzkörpers (2) in ihrer Form angepasste, um die Drehachse (D) rotationssymmetrische, Gegenform (M2) aufweist, wobei der Vorsprung (K) nur auf einer der beiden Stirnflächen (S1, S2) des Wälzkörpers (2) ausgebildet ist.

2. Laufwagen (1) nach Anspruch 1, **dadurch gekennzeichnet, dass** der Laufwagen (1) mehrere Wälzkörper (2) aufweist, wobei die Wälzkörper (2) mit ihrer Drehachse (D) in einer horizontalen Ebene (EH) und/oder einer vertikalen Ebene (EV) angeordnet sind.

3. Laufwagen (1) nach Anspruch 1 oder 2, **dadurch gekennzeichnet, dass** der Laufwagen (1) mehrere Wälzkörper (2) aufweist, wobei ein Teil der Wälzkörper (2) mit ihrer Drehachse (D) in einer horizontalen Ebene (EH) und zumindest ein Wälzkörper (2) in einer rechtwinklig zur horizontalen Ebene (EH) liegenden vertikalen Ebene (EV) angeordnet ist.

4. Laufwagen (1) nach einem der Ansprüche 1 bis 3, **dadurch gekennzeichnet, dass** der Laufwagen (1) zur Aufnahme des zumindest einen Wälzkörpers (2) für jeden einzelnen Wälzkörper (2) je zwei gegenüberliegende Lagerflächen (L) aufweist, wobei der Laufwagen (1) eine an die Lagerflächen (L) angrenzende Anlagefläche (A) ausbildet, welche mit zumindest einer der Stirnflächen (S1, S2) zumindest abschnittsweise kontaktiert.

5. Laufwagen (1) nach Anspruch 4, **dadurch gekennzeichnet, dass** der zumindest eine Wälzkörper (2) an seiner ersten Stirnfläche (S1) einen Vorsprung und an seiner zweiten Stirnfläche (S2) eine im Wesentlichen ebene - insbesondere kreisförmige - Fläche ausbildet, wobei der zumindest eine Wälzkörper (2) mit der zweiten Stirnfläche (S2) die Anlagefläche (A) des Laufwagens (1) kontaktiert und die erste Stirnfläche (S1) des zumindest einen Wälzkörpers (2) mit dem daran angeordneten Vorsprung (K) in eine der zwei Lagerflächen (L) eingreift.

6. Laufwagen (1) nach einem der Ansprüche 1 bis 5, **dadurch gekennzeichnet, dass** der Laufwagen (1) für jeden Wälzkörper (2) zwei gegenüberliegende, in ihrer Form im Wesentlichen gleiche, - vorzugsweise konkav ausgestaltete -Lagerflächen (L) aufweist, wobei in Einbaulage des zumindest einen Wälzkörpers (2) eine der beiden Lagerflächen (L) frei von einem Vorsprung (K) bleibt.

7. Laufwagen (1) nach Anspruch 6, **dadurch gekennzeichnet, dass** der Vorsprung (K) des Wälzkörpers durch einen Kegelmantel mit einem Kegelwinkel (α1) ausgebildet wird und dieser in eine der beiden Lagerflächen (L) eingreift, wobei die Lagerflächen durch eine dem Kegelmantel korrespondierende Gegenform in Form eines Kegelmantels mit einem Gegenwinkel (α2) ausgebildet sind, wobei sich der Wert des Gegenwinkels (α2) insbesondere aus dem Wert des Kegelwinkels (α1) plus 0,5° bis 3,0° errechnet.

8. Laufwagen (1) nach Anspruch 6, **dadurch gekennzeichnet, dass** der Vorsprung (K) des Wälzkörpers durch ein Kugelsegment mit einem Vorsprungradius (R1) ausgebildet wird und dieser in eine der beiden Lagerflächen (L) eingreift, wobei die Lagerflächen durch eine dem Kugelsegment korrespondierende Gegenform in Form eines Kegelsegments mit einem Gegenradius (R2) ausgebildet sind, wobei der Wert des Vorsprungradius (R1) insbesondere kleiner als oder gleich dem Wert des Gegenradius (R2) ist.

9. Laufwagen (1) nach einem der Ansprüche 1 bis 8, **dadurch gekennzeichnet, dass** der Laufwagen (1) aus POM oder PA, vorzugsweise mit einem Glasfaseranteil von 10%-50%, insbesondere von 30% gefertigt ist.

10. Laufwagen (1) nach einem der Ansprüche 1 bis 9, **dadurch gekennzeichnet, dass** das Verhältnis zwischen einer Wälzkörperlänge (WL) des zumindest einen Wälzkörpers (2) und einem Wälzkörperdurchmesser (WD) des zumindest einen Wälzkörpers (2) einen Wert zwischen 2 zu 1 und 4 zu 1 beträgt, wobei die Wälzkörperlänge (WL) des zumindest einen Wälzkörpers (2) insbesondere zwischen 8 mm bis 10 mm beträgt und der Wälzkörperdurchmesser (WD) des zumindest einen Wälzkörpers (2) insbesondere zwischen 2,5 mm bis 3,5 mm beträgt.

11. Laufwagen (1) nach einem der Ansprüche 1 bis 10, **dadurch gekennzeichnet, dass** der zumindest eine Wälzkörper (2) aus POM hergestellt ist.

12. Verfahren zur Herstellung des Laufwagens (1) nach einem der Ansprüche 1 bis 11, **dadurch gekennzeichnet, dass** der Wälzkörper (2) in einem Spritzgießverfahren hergestellt wird, wobei der Anguss des Wälzkörpers (2) für die Lagerung des Wälzkörpers (2) in einem Laufwagen (1) verwendet wird.

13. Schubladenausziehvorrichtung (10) mit zumindest zwei relativ zueinander verfahrbaren Schubladenschienen (3, 4) und zumindest einem Laufwagen (1) nach einem der Ansprüche 1 bis 11.

14. Schublade (11) mit zumindest einer Schubladenausziehvorrichtung (10) nach Anspruch 13.

## Claims

1. A running carriage (1) with at least one rolling body (2) for transmitting a load between two drawer rails (3, 4), wherein the at least one rolling body (2) has a rotational axis (D) and two end faces (S1, S2), wherein the at least one rolling body (2) has a projection (K) with a shell surface (M1) being configured so as to be substantially rotationally symmetrical about the rotational axis (D), wherein the projection (K) is rotationally supported on a bearing surface (L) of the running carriage (1), **characterized in that** the bearing surface (L) has a mating shape (M2) adapted in its form to the shell surface (M1) of the at least one rolling body (2), wherein the mating shape (M2) being configured so as to be rotationally symmetrical about the rotational axis (D) and wherein the projection (K) is formed on one of the two end faces (S1, S2) only.

2. The running carriage (1) according to claim 1, **characterized in that** the running carriage (1) has a plurality of rolling bodies (2), wherein the rolling bodies (2) are arranged with their rotational axes (D) in a horizontal plane (EH) and/or in a vertical plane (EV).

3. The running carriage (1) according to claim 1 or 2, **characterized in that** the running carriage (1) has a plurality of rolling bodies (2), wherein some of the rolling bodies (2) are arranged with their rotational axes (D) in a horizontal plane (EH) and at least one rolling body (2) is arranged in a vertical plane (EV) lying at a right angle to the horizontal plane (EH).

4. The running carriage (1) according to one of claims 1 to 3, **characterized in that** the running carriage (1), in order to receive the at least one rolling body (2), has two opposing bearing surfaces (L) for each individual rolling body (2), wherein the running carriage (1) forms a contact surface (A) adjoining the bearing surfaces (L), wherein the contact surface (A) at least partially contacts at least one of the end faces (S1, S2).

5. The running carriage (1) according to claim 4, **characterized in that** the at least one rolling body (2) has a projection (K) on its first end face (S1) and that the at least one rolling body (2) has a substantially planar, preferably circular, surface on its second end face (S2), wherein the second end face (S2) of the at least one rolling body (2) contacts the contact surface (A) of the running carriage (1) and wherein the first end face (S1) of the rolling body (2) engages with the projection (K) arranged thereon in one of the two bearing surfaces (L).

6. The running carriage (1) according to one of claims 1 to 5, **characterized in that** the running carriage (1) has two opposing bearing surfaces (L) configured so as to be substantially identical in their shape - preferably configured convex or concave - for each rolling body (2), wherein in the installed position of the at least one rolling body (2), one of the two bearing surfaces (L) remains free from a projection (K).

7. The running carriage (1) according to claim 6, **characterized in that** the projection (K) of the rolling body (2) is formed by a cone-shaped shell with a cone angle (α1) and it engages in one of the two bearing surfaces (L), wherein the bearing surfaces (L) are formed by a mating shape, corresponding to the cone-shaped shell, in the form of a cone-shaped shell with an opposite angle (α2), wherein the value of the opposite angle (α2) is in particular determined by the value of the cone angle (α1) plus 0,5° to 3,0°.

8. The running carriage (1) according to claim 6, **characterized in that** the projection (K) of the rolling body (2) is formed by a spherical segment with a projection radius (R1) and it engages in one of the two bearing surfaces (L), wherein the bearing surfaces (L) are formed by a mating shape, corresponding to the spherical segment, in the form of a spherical segment with an opposite radius (R2), wherein the value of the projection radius (R1) is in particular smaller than or equal to the value of the opposite radius (R2).

9. The running carriage (1) according to one of claims 1 to 8, **characterized in that** the running carriage (1) is made of POM or PA, preferably with a glass fibre content of 10%-50%, in particular of 30%.

10. The running carriage (1) according to one of claims 1 to 9, **characterized in that** the ratio between a rolling body length (WL) of the at least one rolling body (2) and a rolling body diameter (WD) of the at least one rolling body (2) has a value between 2 to 1 and 4 to 1, wherein the rolling body length (WL) of the at least one rolling body (2) is in particular between 8 mm and 10 mm and the rolling body diameter (WD) of the at least one rolling body (2) is in particular between 2.5 and 3.5 mm.

11. The running carriage (1) according to one of claims 1 to 10, **characterized in that** the at least one rolling body (2) is made of POM.

12. A process for producing the running carriage (1) according to one of the claims 1 to 11, **characterized in that** the rolling body (2) is produced in an injection-moulding process, wherein the sprue of the rolling body (2) is used for the mounting of the rolling body (2) in a running carriage (1).

13. A drawer pull-out device (10) with at least two drawer rails (3, 4) movable relative to one another and at least one running carriage (1) according to one of claims 1 to 11.

14. A drawer (11) with at least one drawer pull-out device (10) according to claim 13.

## Revendications

1. Chariot (1) doté d'au moins un corps de cylindre (2) destiné au transfert de charges entre deux glissières de tiroir (3, 4), dans lequel l'au moins un corps de cylindre (2) comporte un axe de rotation (D) et deux surfaces frontales (S1, S2) et dans lequel l'au moins un corps de cylindre (2) comporte une protubérance (K) dotée d'au moins une surface de revêtement (M1) sensiblement symétrique en rotation autour de l'axe de rotation (D), dans lequel la protubérance (K) est disposée en rotation sur une surface de palier (L) du chariot (1), **caractérisé en ce que** la surface de palier (L) comporte un contre-contour (M2) symétrique en rotation autour de l'axe de rotation (D) et adapté dans sa forme à la surface de revêtement (M1) de l'au moins un corps de cylindre (2), dans lequel la protubérance (K) est réalisée sur une seule des deux surfaces frontales (S1, S2) du corps de cylindre (2).

2. Chariot (1) selon la revendication 1, **caractérisé en ce que** le chariot (1) comporte plusieurs corps de cylindre (2), dans lequel les corps de cylindre (2) sont disposés avec leurs axes de rotation (D) dans un plan horizontal (EH) et/ou dans un plan vertical (EV).

3. Chariot (1) selon la revendication 1 ou 2, **caractérisé en ce que** le chariot (1) comporte plusieurs corps de cylindre (2), dans lequel une partie des corps de cylindre (2) est disposée avec leurs axes de rotation (D) dans un plan horizontal (EH) et au moins un corps de cylindre (2) est disposé dans un plan vertical (EV) perpendiculaire au plan horizontal (EH).

4. Chariot (1) selon l'une des revendications 1 à 3, **caractérisé en ce que** le chariot (1), afin d'accueillir l'au moins un corps de cylindre (2), comporte deux surfaces de palier (L) opposées l'une à l'autre pour chaque corps de cylindre individuel (2), dans lequel le chariot (1) forme une surface d'appui (A) contiguë aux surfaces de palier (L), laquelle entre en contact au moins par sections avec au moins une des surfaces frontales (S1, S2).

5. Chariot (1) selon la revendication 4, **caractérisé en ce que** l'au moins un corps de cylindre (2) forme une protubérance sur sa première surface frontale (S1) et forme une surface sensiblement plane, en particulier circulaire, à sa deuxième surface frontale (S2), dans lequel l'au moins un corps de cylindre (2) entre avec la deuxième surface frontale (S2) en contact avec la surface d'appui (A) du chariot (1) et la première surface frontale (S1) de l'au moins un corps de cylindre (2) s'engage avec la protubérance (K) disposée sur celle-ci dans une des deux surfaces de palier (L).

6. Chariot (1) selon l'une des revendications 1 à 5, **caractérisé en ce que** le chariot (1) comporte pour chaque corps de cylindre (2) deux surfaces de palier (L) opposées l'une à l'autre, sensiblement identiques dans leur forme et de préférence configurées de manière concave, dans lequel dans la position de montage de l'au moins un corps de cylindre (2) une des deux surfaces de palier (L) reste dégagée d'une protubérance (K).

7. Chariot (1) selon la revendication 6, **caractérisé en ce que** la protubérance (K) du corps de cylindre est réalisée par une enveloppe conique dotée d'un angle de cône (α1) et celle-ci s'engage dans une des deux surfaces de palier (L), dans lequel les surfaces de palier sont réalisées par un contre-contour correspondant à l'enveloppe conique sous forme d'une enveloppe conique dotée d'un angle de cône (α2), dans lequel la valeur de l'angle de cône (α2) se calcule en particulier à partir de la valeur de l'angle de cône (α1) plus 0,5° à 3,0°.

8. Chariot (1) selon la revendication 6, **caractérisé en ce que** la protubérance (K) du corps de cylindre est réalisée par un segment sphérique dotée d'un rayon de protubérance (R1) et celle-ci s'engage dans une des deux surfaces de palier (L), dans lequel les surfaces de palier sont réalisées par un contre-contour correspondant au segment sphérique sous forme d'un segment conique doté d'un contre-rayon (R2), dans lequel la valeur du rayon de protubérance (R1) est en particulier inférieure ou égale à la valeur du contre-rayon (R2).

9. Chariot (1) selon l'une des revendications 1 à 8, **caractérisé en ce que** le chariot (1) est fabriqué en POM ou en PA, de préférence avec un pourcentage de fibres de verre de 10 % - 50 %, en particulier de 30 %.

10. Chariot (1) selon l'une des revendications 1 à 9, **caractérisé en ce que** le rapport entre une longueur de corps de cylindre (WL) de l'au moins un corps de cylindre (2) et un diamètre de corps de cylindre (WD) de l'au moins un corps de cylindre (2) possède une valeur entre 2 pour 1 et 4 pour 1, dans lequel la longueur de corps de cylindre (WL) de l'au moins un corps de cylindre (2) vaut en particulier entre 8 mm et 10 mm et le diamètre de corps de cylindre (WD) de l'au moins un corps de cylindre (2) vaut en particulier entre 2,5 mm et 3,5 mm.

11. Chariot (1) selon l'une des revendications 1 à 10, **caractérisé en ce que** l'au moins un corps de cylindre (2) est fabriqué en POM.

12. Procédé de fabrication d'un chariot (1) selon l'une des revendications 1 à 11, **caractérisé en ce que** le corps de cylindre (2) est fabriqué dans un processus de moulage par injection, dans lequel la coulée du corps de cylindre (2) est utilisée pour loger le corps de cylindre dans un chariot (1).

13. Dispositif télescopique de tiroir (10) doté d'au moins deux glissières de tiroir (3, 4) déplaçables l'une par rapport à l'autre et d'au moins un chariot (1) selon l'une des revendications 1 à 11.

14. Tiroir (11) doté d'au moins un dispositif télescopique de tiroir (10) selon la revendication 13.
